# EUROPEAN PATENT APPLICATION

(11) **EP 1 932 716 A1**
(43) Date of publication of application: **18.06.2008**
(21) Application number: 06811418.0
(22) Date of filing: 06.10.2006
(51) Int. Cl.: B60N 3/08, B60R 7/04

(54) **ARTICLE STOWAGE DEVICE FOR VEHICLE**

(30) Priority: 07.10.2005 JP 2005294637
(71) Applicant: Calsonic Kansei Corporation, Tokyo 164-8602 (JP)
(72) Inventor: KIKUCHI, Masami, Tokyo 164-8602 (JP)
(74) Representative: Grünecker, Kinkeldey, Stockmair & Schwanhäusser Anwaltssozietät
(86) International application number: PCT/JP2006/320091
(87) International publication number: WO 2007/043467

(57) **Abstract**

An article storage device for a vehicle, includes: a body (3) with an article storage space (1) and a lid accommodation space (2); a lid (4) capable of opening and closing the article storage space (1); a drive link (21) for driving the lid (4) between a close position where the article storage space (1) is closed and an open position where the article storage space (1) is opened while the lid (4) is accommodated in the lid accommodation space (2), the drive link (21) being rotatably attached at one end to the body (3) and connected at the other end to the lid (4); and an urging mechanism (25) for urging the drive link so as to drive the lid (4) from the close position to the open position.

## Description

### Technical Field

The present invention relates to an improvement in an article storage device for a vehicle, for example, as a cup holder device or an ashtray device.

### Background Art

Various article storage devices for a vehicle, such as a cup holder device or an ashtray device, are provide in the vehicle compartment of a vehicle such as an automobile. As one of the article storage devices for a vehicle, known is a space-saving-type article storage device for a vehicle including: an article storage space for putting an article therein; a lid capable of opening and closing the article storage space; and a lid accommodation space for accommodating the lid when the lid is opened (for example, see JP-A 2002-178818).

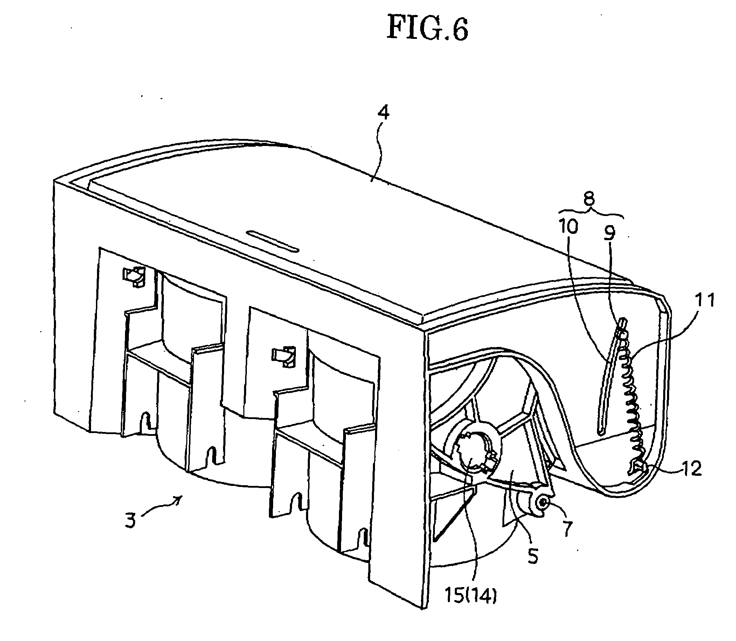

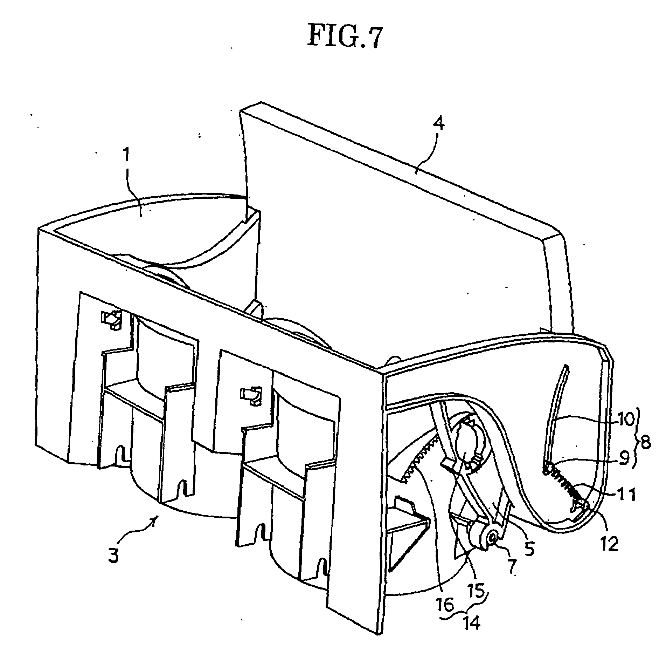

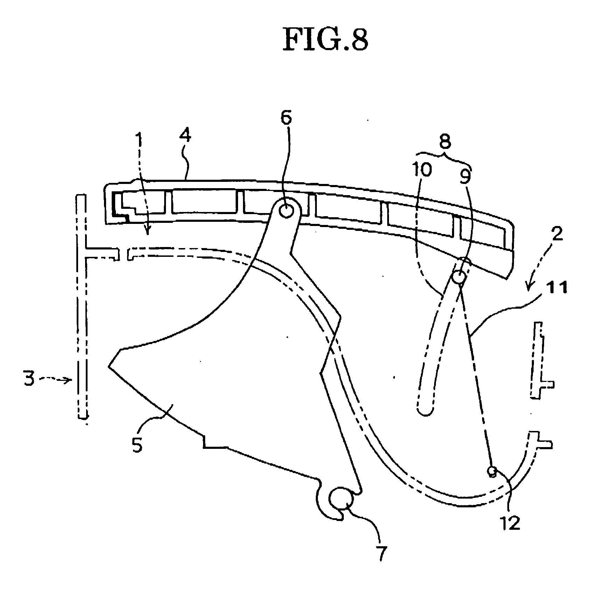

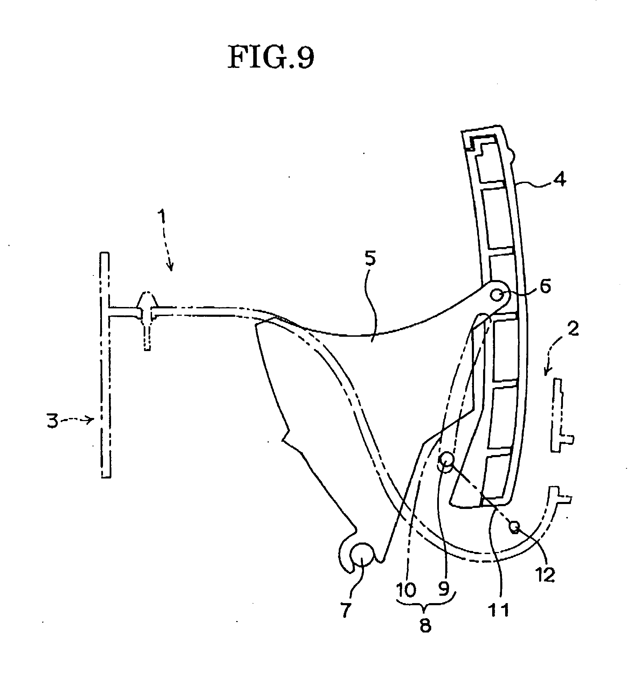

A conventional space-saving-type article storage device for a vehicle includes a body 3 as shown in FIG. 6 and FIG. 7. This body 3 has an approximately rectangular parallelepiped shape, and extends longer in a width direction of the vehicle (not shown). This body 3 is attached to, for example, a dashboard (not shown) of the vehicle so that the left side of the body 3 viewed in FIG. 6 to/and FIG. 9, may face a passenger seated in the vehicle compartment. Herein, a front refers to a side, facing the passenger, of the body 3, and a rear refers to the opposite to the front.
An article storage space 1, in which the passenger puts an article, is formed in the top surface of the body 3. The top portion of the article storage space 1 is to be opened. A lid 4 is disposed so as to be capable of opening and closing the article storage space 1. A lid accommodation space 2 for accommodating the lid 4 is formed at a rear portion of the body 3 (see FIG. 8 and FIG. 9). The lid 4 can be moved between a close position and an open position. When at the close position, the lid 4 is horizontally disposed to close the article storage space 1 as shown in FIG. 8. When at the open position, the lid 4 is substantially vertically disposed to open the article storage space 1 as shown in FIG. 9. The opening and closing operations of the lid will be described later.

A guide arm 5 is disposed for guiding the opening and closing of the lid 4. One end of the guide arm 5 is rotatably attached to the body 3 via a shaft 7. The other end of the guide arm 5 is rotatably attached to a middle portion of the lid 4 via a shaft 6.
A shaft 9 is attached at a rear of the lid 4. Both end portions of the shaft 9 are inserted in arc-shaped cam grooves 10 provided in both side surfaces of the body 3.
A tension spring 11 is disposed for urging the lid to the open position. One end of the tension spring 11 is connected to the shaft 9, and its other end is connected to a lock position 12 provided at a lower portion of the body 3, at a position off the axis line of the cam groove 10.
Furthermore, a damping mechanism 14 capable of damping the urging force of the tension spring 11 is disposed as shown in FIG. 7. The damping mechanism 14 includes: a viscous damper 15 (bidirectional damper) attached to the guide arm 5; and a sector gear 16 which is provided to a side surface of the body 3 so as to engage with an input gear attached to an input shaft of the viscous damper 15. The sector gear 16 is arc shaped while taking the shaft 7 as the center of the circle. Although only a mounting base of the viscous damper 15 is shown in FIG. 6 and FIG. 7, the viscous damper 15 has a known structure.
It should be noted that an unillustrated locking mechanism for holding the lid 4 at the close position is disposed between the body 3 and the lid 4.

In the article storage device for a vehicle as described above, when the locking mechanism is released with the body 3 being closed, the lid 4 moves from the close position where the article storage space 1 is closed, to the open position where the lid 4 is accommodated in the lid accommodation space 2. Thus, the article storage space 1 is opened. To be more specific, the releasing of the locking mechanism causes the shaft 9 to move downward along the cam groove 10 by the urging force of the tension springs 11, pulling the rear portion of the lid 4 downward. Accordingly, the downward movement of the rear portion of the lid 4 causes the front portion thereof to gradually move backward, and concurrently to rise. Eventually, the lid 4 is accommodated in the lid accommodation space 2. While the lid 4 is moved between the close position to the open position, the posture of the lid 4 changes, by the guide arm 5, from the substantially horizontal state where the article storage space 1 is closed, to the substantially vertical state where the lid 4 is accommodated in the lid accommodation space 2. Note that the damping mechanism 14 attached to the portion of the guide arm 5 damps the urging force of the tension spring 11, and thereby the lid 4 is opened slowly.

After the article storage space 1 is opened in this manner, it becomes possible to put an article in the article storage space 1. When opened, the lid 4 is accommodated in the lid accommodation space 2, thereby saving the space.

Additionally, when the body 3 is to be closed, the lid 4 is moved from the open position where the lid 4 is accommodated in the lid accommodation space 2, to the close position where the lid 4 closes the article storage space 1. This movement is carried out against both of the urging force of the tension springs 11 and the damping force of the damping mechanisms 14.

On the other hand, the conventional space-saving-type article storage device for a vehicle is provided with a posture-changing mechanism 8 including the guide shaft 9 and the cam groove 10 for changing the posture. This configuration makes it difficult to synchronize the opening operation of the lid 4 with the posture changing of the lid 4, resulting in a noncontinuous operation or a multi-staged operation, in which the degree of posture changed (or the degree of posture altered) or the opening speed varies drastically when the lid 4 starts opening (early stage of opening), when the lid 4 completes opening (late stage of opening), and the like.

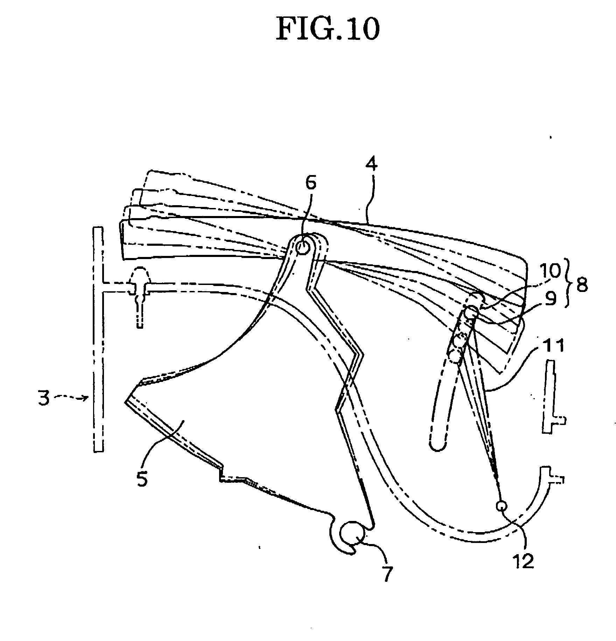

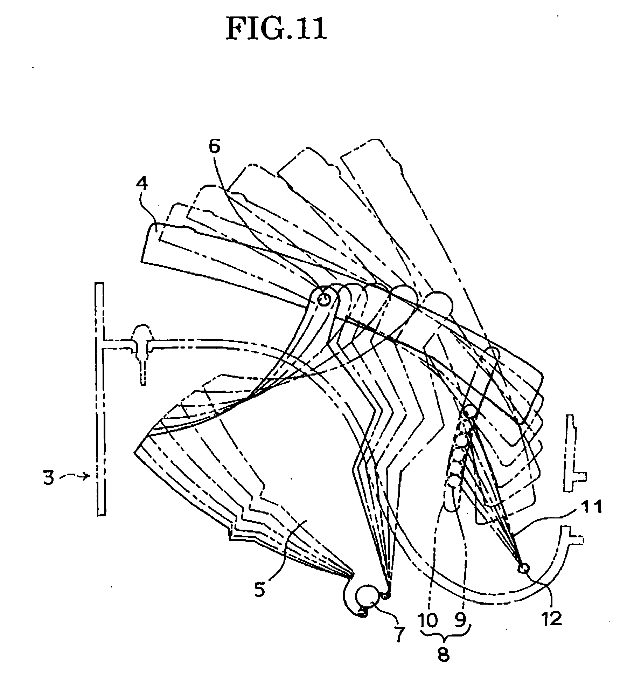

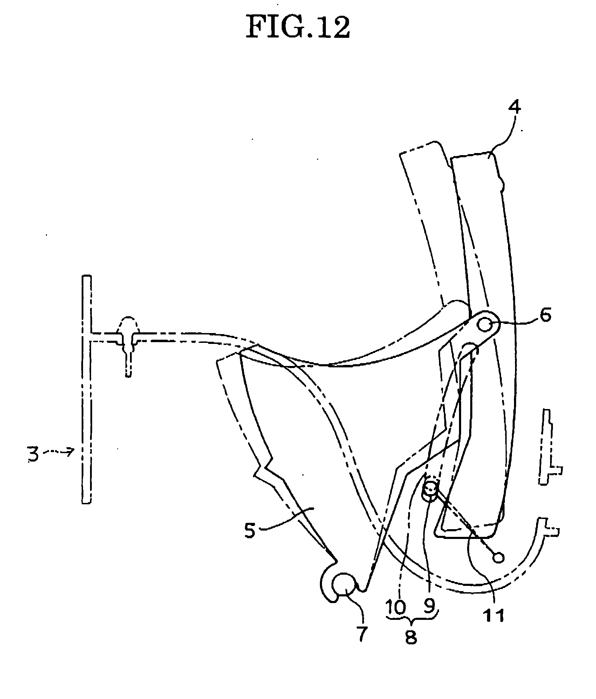

More specifically, in the early stage of opening, mainly the posture of the lid 4 changes as the lid 4 pivots on the rotation shaft 6, as shown in FIG. 10. Thus, the movement of the guide arm 5 is small, and the damping mechanism 14 which is provided to the portion of the guide arm 5 hardly functions. Thereby, the opening speed of the lid 4 is increased.
In the middle stage of opening, mainly the guide arm 5 moves about the rotation shaft 7, as shown in FIG. 11. Thus, the damping mechanism 14 functions to rapidly decrease the opening speed of the lid 4.
In the late stage of opening, mainly the posture of the lid 4 changes as the lid 4 pivots on the guide shaft 9, as shown in FIG. 12. Thus, the movement of the guide arm 5 again becomes small, and the tension spring 11 provided to the portion of the guide arm 5 hardly function. Thereby, the factor which influences the opening speed of the lid 4 is only the change in its own weight, and it is impossible to control the speed.

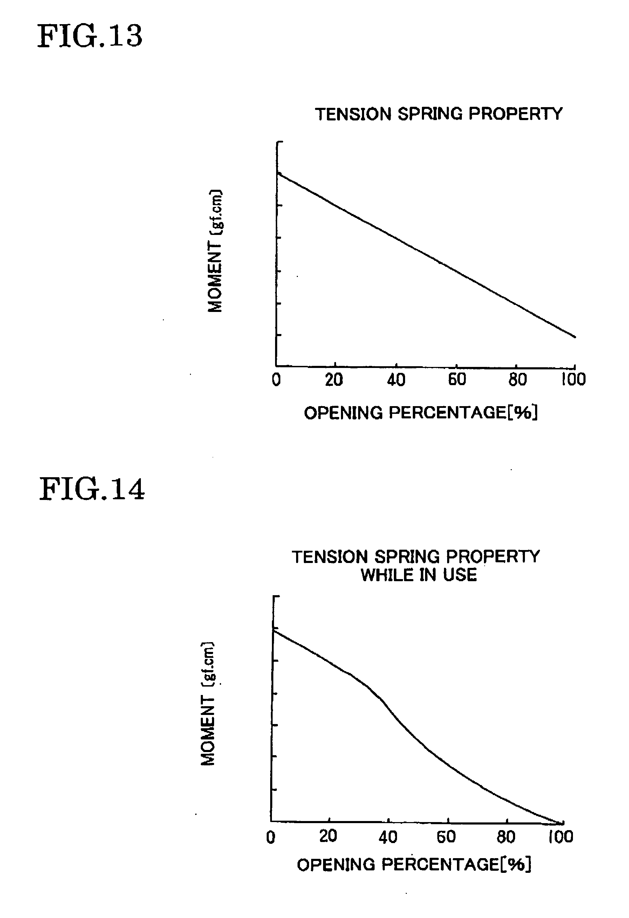

In the meanwhile, the tension spring 11 is used. When this tension spring 11 is used in a device which allows a linear movement, the tension spring 11 expresses a primary curve-like (linear) property as shown in FIG. 13. On the other hand, when the tension spring 11 is used in a device which allows a rotational movement or nonlinear movement as shown in FIG. 6 to FIG. 9, the tension spring 11 expresses a property as shown by, for example, the complicated curve in FIG. 14 due to an influence by the amount of force in the rotational direction. Accordingly, the handling is difficult.

From these reasons, there has been a difficulty to smoothly control the opening-speed property of the lid 4 with the posture-changing mechanism 8 configured of the guide shaft 9 and the cam groove 10 for changing the posture.
For the same reasons, a smooth-operation property of the lid 4 to be closed has not yet been achieved, and therefore it has been difficult to obtain a smooth-operation feeling.

### Disclosure of the Invention

An object of the present invention is to provide an article storage device for a vehicle, which is capable of performing opening and closing operations of a lid smoothly and quickly with a little force.

In order to achieve the above object, an article storage device for a vehicle according to one embodiment of the present invention includes: a body with an article storage space and a lid accommodation space; a lid capable of opening and closing the article storage space; a drive link, one end of which is rotatably attached to the body, the other end of which is connected to the lid, and which drives the lid between a close position where the article storage space is closed and an open position where the article storage space is opened while the lid is accommodated in the lid accommodation space; and an urging mechanism which urges the drive link so as to drive the lid from the close position to the open position.

According to the above configuration, the lid is supported by the drive link which performs a restricted movement. Thereby, it becomes possible to reliably move the lid along a specific track. It becomes also possible to easily accomplish the synchronization of the reliable movement of the lid with the opening operation of the lid to eliminate the drastic change in the degree of posture changed between the beginning and the completion of opening the lid. Moreover, a torsion spring as the urging mechanism can express a primary curve-like (linear) property in a device which allows a rotational movement. Accordingly, it becomes possible to easily obtain a speed property at the time of opening the lid and a smooth operation property at the time of closing.

### Brief Description of the Drawings

FIG. 1 is a perspective view of an article storage device for a vehicle according to an embodiment of the present invention, showing that an article storage space is closed by a lid.
FIG. 2 is a schematic side view of FIG. 1.
FIG. 3 is a schematic side view of FIG. 2 when the article storage space is opened.
FIG. 4 is an explanatory drawing showing an opening operation of the lid.
FIG. 5 is a graph showing a property of a torsion spring.
FIG. 6 is a perspective view showing a conventional article storage device for a vehicle when a lid is closed.
FIG. 7 is a perspective view of FIG. 6 when the lid is opened.
FIG. 8 is a schematic side view of FIG. 6.
FIG. 9 is a schematic side view of FIG. 7.
FIG. 10 is a motion diagram showing an early opening stage of the lid.
FIG. 11 is a motion diagram showing a middle opening stage of the lid.
FIG. 12 is a motion diagram showing a late opening stage of the lid.
FIG. 13 is a graph showing a property of a tension spring.
FIG. 14 is a graph showing a property of the tension spring of FIG. 13 when the tension spring is used in the article storage device for a vehicle of FIG. 6.

### Description of Symbols

- 100: body
- 101: article storage space
- 102: lid
- 103: lid accommodation space
- 104: drive link
- 107: urging mechanism
- 108: torsion spring
- 109: guide arm
- 120: damping mechanism

### Best Mode for Carrying out the Invention

Hereinafter, specific description will be given of an embodiment that embodies a beat mode of the present invention with reference to the accompanying drawings.

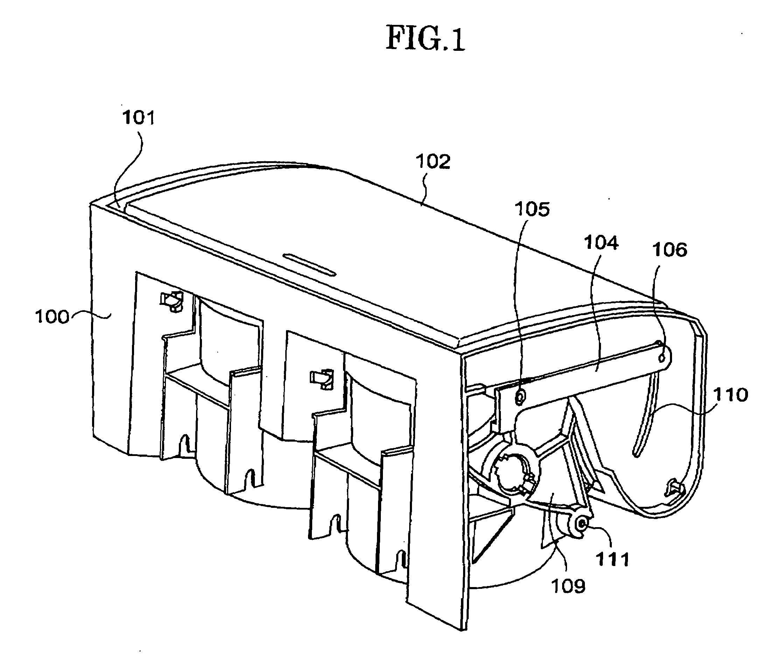

With reference to FIG. 1 to FIG. 5, shown is one embodiment of an article storage device for a vehicle according to the present invention.
The article storage device for a vehicle is configured as a space-saving-type article storage device for a vehicle such as a cup holder device and an ashtray device provided in a vehicle compartment of the vehicle such as an automobile.

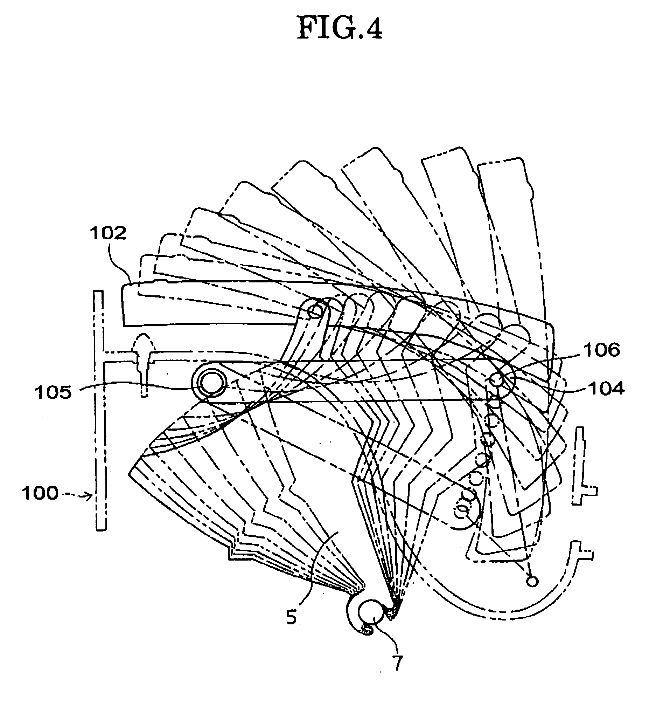

The article storage device for a vehicle includes a body 100. This body 100 has an approximately rectangular parallelepiped shape, and is disposed in such a way that, for example, a longitudinal direction thereof is parallel to a width direction of the vehicle (not shown). This body 100 is attached to, for example, a dashboard (not shown) of the vehicle so that the left side of the body 100, viewed in FIG. 1 to/and FIG. 4, may face a passenger seated in the vehicle compartment. Herein, a front refers to a side, facing the passenger, of the body 100, and a rear refers to the opposite side to the front.

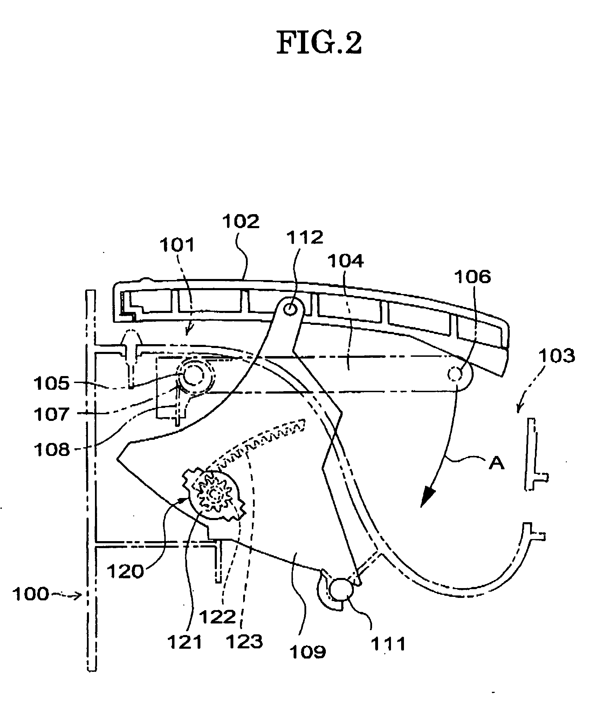

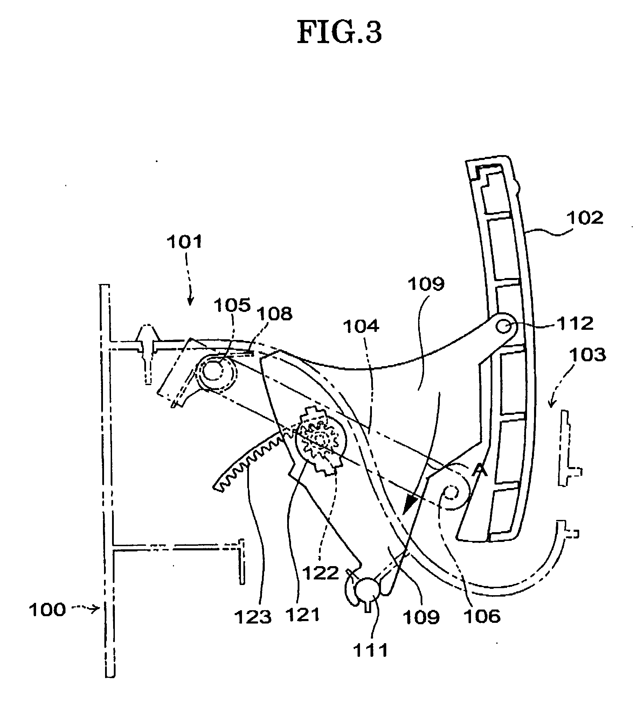

An article storage space 101, in which the passenger puts an article, is formed over the top surface of the body 100. The top portion of the article storage space 101 is to be opened. A lid 102 is disposed to close the article storage space 101. The lid 102 is provided so as be capable of opening and closing the article storage space 101. A lid accommodation space 103 for accommodating the lid 102 is formed at a rear portion of the body 100 (see FIG. 2 and FIG. 3).

It should be noted that at least one drive link 104 supports the lid 102, and this drive link 104 drives the lid 102 between a close position and an open position. When at the close position, the lid 102 is horizontally disposed to close (cover) the article storage space 101 as shown in FIG. 2. When at the open position, the lid 102 is substantially vertically disposed to open the article storage space 101 as shown in FIG. 3.

Incidentally, when only a single drive link is used, this drive link is preferably disposed to an approximately central portion, in a width direction, of the lid 102.

In this embodiment, two drive links are used as illustrated. These drive links are disposed outside the respective two side surfaces of the body 100 (see FIG. 1).

One end of each drive link 104 is rotatably attached to the body 100 via a shaft 105, while the other end thereof is connected to a rear portion of the lid 102 via a shaft 106. This shaft 106 is inserted in cam grooves 110 provided in the side surfaces of the body (see FIG. 1).

The cam groove 110 is arc shaped while taking the shaft 105 as the center of the circle so that the rotation edge of the drive link, which is the shaft 106, can smoothly move when the drive link 104 rotates around the shaft 105. Thus, since one end of the drive link 104 is rotatably supported to the body 100 and the other end thereof rotates along the cam groove 110 provided in the body 100, this drive link is allowed to perform a restricted rotational movement. This rotational movement enables the lid 102 to move smoothly from the close position to the open position as described above.

An urging mechanism 107 is disposed to urge the drive link 104 so as to drive the lid 102 from the close position to the open position. In the illustrated embodiment, the urging mechanism 107 is configured of a torsion spring 108 provided around the shaft 105 which is a supporting shaft of the drive link 104.

A guide arm 109 as a posture-changing mechanism is disposed for guiding the opening and closing movements of the lid 102. One end of the guide arm 109 is rotatably attached to the body 100 via a shaft 111, while the other end thereof is connected to a substantially-middle portion of the lid 102 via a shaft 112. Note that the line connecting the axis line of the shaft 112 and the axis line of the shaft 111 is disposed substantially vertically when the lid 102 is at the close position (see FIG. 2).

In this embodiment of the present invention, the guide arm 109 is not always required to drive the lid 102 from the close position to the open position. It is only necessary that the drive link 104 and the torsion spring 108 be provided in order to open the lid 102. Nevertheless, the provision of the guide arm 109 allows a further smoother operation for opening the lid 102. Incidentally, it is possible to dispose other springs such as a tension spring in place of the torsion spring 108. Furthermore, a driving mechanism such as a cylinder may be adopted other than the springs.

Moreover, disposed is a damping mechanism 120 capable of damping the urging force of the urging mechanism 107. This damping mechanism 120 has the same structure as that of the conventional damping mechanism. The structure will be explained simply as follows. The damping mechanism 120 includes: a viscous damper 121 (bidirectional damper) attached to the guide arm 109; and a sector gear 123 which is provided to a side surface of the body 100 so as to engage with an input gear attached to an input shaft of the viscous damper 121. The sector gear 123 is arc shaped while taking the shaft 111 as the center of the circle, the shaft 111 being the rotational center of the guide arm 109.

It should be noted that an unillustrated locking mechanism is disposed between the body 100 and the lid 102.

In this embodiment, the drive link 104 is disposed substantially horizontally when the lid 102 is at the close position. At this time, the drive link 104 crosses the line connecting the axis line of the shaft 112 and the axis line of the shaft 111 in the guide arm 109 (see FIG. 2). Thereby, the drive link 104 and the guide arm 109 constitute a crosslink mechanism, which are capable of synchronized operations. Moreover, the shafts 105, 106 of the drive link 104 and the shafts 111, 112 of the guide arm 109 are attached to the side surfaces of the body 100. Their axis lines are extending in a width direction of the body 100.
A coil portion which is in the middle of the torsion spring 108 is disposed around the shaft 105. The two end portions of the torsion spring 108 are locked in the body 100 and the drive link 104, respectively. This torsion spring 108 is bent when the lid 102 is closed, saving an urging force. The torsion spring 108 is designed to release the saved urging force when the lid 102 is opened.

Next, description will be given of operations of the article storage device for a vehicle having the configuration as described above.

When the locking mechanism is released with the article storage space 101 being closed with the lid 102 (FIG. 2), the drive links 104 oscillates downward along the cam groove 110 by the urging force of the urging mechanism 107, as indicated by an arrow A in FIG. 2. When the drive link 104 is oscillated, the lid 102 rises gradually. Subsequently, while being guided by the guide arm 109, the lid 102 is caused to move from the article storage space 101 to the lid accommodation space 103 (see FIG. 3). Eventually, the article storage space 101 is opened.

During the movement of the lid 102 by the drive link 104, the posture of the lid 102 changes, by the guide arm 109 being the posture-changing mechanism, from the horizontal state where the article storage space 101 is closed, to the substantially vertical state where the lid 102 is accommodated in the lid accommodation space 103.

In this respect, an elastic force is generated when the torsion spring 108 being the urging mechanism 107 is released from the bent state, and return to the original position. This elastic force thus generated causes the rear portion of the drive link 104 to oscillate downward. Thereby, the posture of the lid 102 is changed. Accompanying this change, the guide arm 109 is driven, so that the lid 102 is opened. The series of operations by the lid 102, the drive link 104, and the like are shown in FIG. 4.

Additionally, the damping mechanism 120 attached to a portion of the guide arm 109 damps the urging force of the urging mechanism 107, and thereby the lid 102 is opened slowly.

After the article storage space 101 is opened in the above-described manner, it becomes possible to put an article in the article storage space 101. When this opening operation is completed, the lid 102 is accommodated in the lid accommodation space 103, and thereby space-saving is accomplished.

Note that, when the article storage space 101 is closed with the lid 102, the lid 102 is moved from the lid accommodation space 103 to the article storage space 101. This movement is carried out against both of the urging force of the urging mechanism 107 and the damping force of the damping mechanism 120.

According to this embodiment, the lid 102 is opened, while being supported by the drive link 104 that performs the restricted movement. Thereby, it is possible to easily achieve the synchronized opening operation of the lid 102 in order to eliminate the drastic variation in the degree of posture changed between the beginning and the completion of opening the lid 102. In other words, as shown in FIG. 4, it is possible to make the degrees of posture changed in the early and late stage of opening the lid 102 the same as that in a middle stage of opening. It is also possible to make the degrees of oscillation of the guide arms 109 in the early and late stage of opening the same as that in the middle stage of opening. Thus, the damping function of the damping mechanisms 120 attached to the portions of the respective guide arms 109 can be uniformly executed on the entire area where the lid is moved.

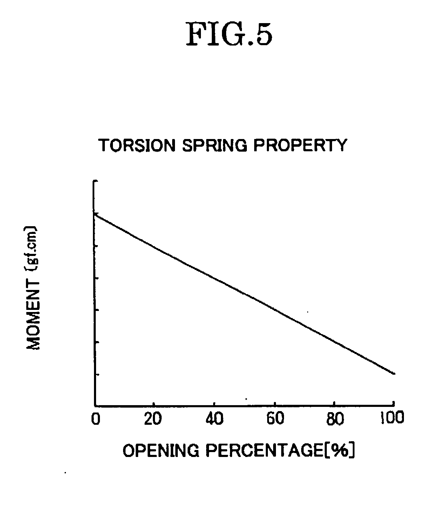

Moreover, the torsion spring 108 as the urging mechanism 107 can express a primary curve-like (linear) property, as shown in FIG. 5, in a device which allows a rotational movement. The present invention has the following advantages as described above. Specifically, it is possible to efficiently obtain the speed property at the time of opening the lid 102 and the operation-force property at the time of closing. Moreover, since the lid is supported and driven by the drive link that performs the restricted movement, it is possible to smoothly control the operation of the lid, and to simplify the structure of the driving mechanism for the lid.

Hereinabove, the description has been given of the preferred embodiment of the present invention. However, the present invention is not limited only to the above embodiment. It should be noted that various changes or modifications can be made on such an embodiment.

### Industrial Applicability

In the above embodiment, the present invention has been applied to an article storage device for a vehicle. However, the present invention can be applied to a structure in which a lid is opened and closed, including audio, office equipment such as a desk, and so on.

## Claims

1. An article storage device for a vehicle comprising:
a body with an article storage space and a lid accommodation space;
a lid capable of opening and closing the article storage space;
a drive link, one end of which is rotatably attached to the body, the other end of which is connected to the lid, and which drives the lid between a close position where the article storage space is closed and an open position where the article storage space is opened while the lid is accommodated in the lid accommodation space; and
an urging mechanism which urges the drive link so as to drive the lid from the close position to the open position.

2. The article storage device for a vehicle according to claim 1, further comprising a posture-changing mechanism which movably supports the lid, and which guides the lid to change its posture when the lid moves from the close position to the open position.

3. The article storage device for a vehicle according to claim 2, wherein the posture-changing mechanism includes an oscillating arm, one end of which is rotatably attached to the body, and the other end of which is connected to the lid.

4. The article storage device for a vehicle according to claim 1, further comprising a damping mechanism capable of damping an urging force of the urging mechanism.

5. The article storage device for a vehicle according to claim 3, wherein the damping mechanism includes: a viscous damper attached to the oscillating arm; an input gear attached to the viscous damper; and a sector gear 16 provided to a side surface of the body 3 so as to engage with the input gear.

6. The article storage device for a vehicle according to claim 1, wherein the urging mechanism is configured of a torsion spring provided to a rotation shaft of the drive link.

7. The article storage device for a vehicle according to claim 1, wherein the drive link is capable of moving along a cam groove provided to the body.
